# EUROPEAN PATENT SPECIFICATION

(11) **EP 3 473 435 B1**
(45) Date of publication and mention of the grant of the patent: **11.08.2021**
(21) Application number: 18200978.7
(22) Date of filing: 17.10.2018
(51) Int. Cl.: B32B 15/08, B29C 45/14, B65D 35/00, B29D 1/00, B29D 23/00, B29C 70/00

(54) **THE HEAD OF FLEXIBLE TUBE INTENDED FOR CONNECTING WITH THE BODY OF THE TUBE AND THE METHOD OF TUBE PRODUCTION**
KOPF EINES FLEXIBLEN SCHLAUCHS ZUR VERBINDUNG MIT DEM KÖRPER DES SCHLAUCHS UND VERFAHREN ZU DESSEN HERSTELLUNG
TÊTE DE TUBE FLEXIBLE DESTINÉE À ÊTRE CONNECTÉE AU CORPS DU TUBE, TUBE FLEXIBLE ET SON PROCÉDÉ DE PRODUCTION

(30) Priority: 19.10.2017 PL 42320517
(43) Date of publication of application: 24.04.2019
(73) Proprietor: Witoplast Kisielinscy Spólka Jawna, 05-340 Rudno (PL)
(72) Inventor: Kisielinski, Michal, 05-075 Warsaw (PL)
(74) Representative: Kondrat, Mariusz

(56) References cited:
- EP-A2- 0 405 547
- WO-A1-2009/157931
- WO-A1-2012/126849

## Description

The subject of the invention is the head of the flexible tube and the flexible tube intended for storing and dosing of products, which has an aluminium barrier and dispersed silver ions. The flexible tube has a head which is equipped with a mouth and a flange connected to the body of flexible tube. The head contains an internal insert which, by taking the inner shape of the head, adheres to the internal surface of a flange and mouth, closing at the same time the tight vent of the mouth. The internal insert also contains the dispersed silver ions which are in direct contact with the content of the tube.

Packages or containers made of a plastic, especially tubes for such substances as paste, emulsion, liquid, cream, gel and ointment, etc. have so far been produced in the plastic blow moulding process until reaching the desired shape. Unfortunately, such techniques have a disadvantage that in case of using the materials best suited for injection moulding and which are flexible in polymerised state, such as for example, polyethylene, PVC, PVDC, bottle walls which have no barrier properties are obtained. As a consequence, the materials of which they are filled have a tendency to change after prolonged storage period (oxidation, loss of water or other solvent or components with low boiling point, etc.) and thereby they become useless.

The solution of tube, known from DE1704117 and EP2435331 documents, used to store cosmetic products, the body of which has a multilayered structure, where one of the layers may be a barrier layer. The European document also discloses the method of tube's production, which covers the steps of tube's forming of sheet material, applying the thermoplastic cover and equipping the body with the head.

There is a tube known from P.410678 application which has a multilayered body and multilayered head, wherein the multilayered body of the tube consists of at least one barrier layer connected from one side with at least one thermoplastic layer welded in longitudinal lap joint made of the edges of layers, wherein the body has an external surface covered with polymer coating and the multilayered head of a container contains at least one non-metallic barrier layer connected from both sides with thermoplastic layer and is in whole extruded in coextrusion process.

There are known solutions of flexible tubes containing the insert made, for example, of aluminium foil, which is connected with the body and the head in point of connection of the body with the flange of the head closing the inlet of the tube at the lower end of the mouth. Such solution still leaves an area equal to the volume of the mouth which is not covered with barrier protection when the insert layer is punctured. The product which requires the special barrier protection is not protected after entering to the volume of the mouth.

From the EP 2703312 description the improved tube's head is known which contains a barrier insert, wherein the tube's head has a solid of revolution shape and is adapted to be connected with the coat so as to create the internal space of the tube. The barrier insert is located in contact with the mouth's off-set, preferably substantially perpendicularly to the longitudinal axis of the mouth and it forms the barrier between the body and the product inside the internal space. The central part of an insert is a non-perforated disc designed to close the mouth tightly. The mentioned insert is substantially flat and is included inside the cylindrical space with diameter D and height h, wherein the ratio of h/D is less than 0.1 and the diameter D corresponds to the diameter of an insert. The insert is a disc made of aluminium or ethylene vinyl alcohol (EVOH) copolymer.

From the EP 2868591 (US2015/0114993) description the tube's head is known which has a barrier insert which is adapted to be connected with the flange so as to create the internal space of the tube. The barrier insert is located in contact with the mouth's flange in order to create the barrier between the body and the product inside the internal space. The central part of an insert is a non-perforated disc designed to close the mouth tightly. Said insert contains oblique centre for positioning in the head allowing correct placing of the insert in the head, especially by cooperation with the mouth. Said oblique centre for positioning is a dome-shaped deformation located in the central part of the insert. The deformation is initially formed on the insert. Such deformation enables to correctly place and centre the insert in the tube's head. The dome is preferably circular and has a diameter Dd and height hd, wherein the ratio of h/D is less than 0.1, preferably 0.08 and more preferably 0.065, and the diameter D corresponds to the diameter of the insert. The insert can be made of multilayered material consisting of a layer of aluminium and/or ethylene vinyl alcohol (EVOH) copolymer layer.

From the description of utility model W.125263 the packaging tube is known, intended for storing the cosmetic or parapharmaceutical preparations consisting of longitudinal body made of seven-layer laminate based on thermoplastic polymer, equipped with threaded head and a cup, characterized in that the internal layer of laminate contains dispersed silver ions. The barrier layer in this tube is a polymer layer of a plastic called EVOH.

WO2012126849A1 discloses a pre-formed tube end piece, or head, suitable for containers able to store conventionally "hard-to-hold" chemical compositions, such as hair dye. The end piece (the head) of the disclosure is formed in a separate step from the step in which the tube is formed, particularly, by injection of plastic material - this step is distinct from the step of the attachment of the end piece to the tube skirt. In other words, when the material is injected into the mould in order to form the end piece, the mould does not contain the skirt. The attachment between the skirt and the end piece for forming the container is realized with a different step which is done after the formation step was completely finished. Thus, the preformed end piece has a portion for the attachment of the tube skirt (or laminate web) in order to form a finished tube. Thus, to form a finished tube, the skirt is simply heat- sealed or otherwise attached to the preformed end piece. The end piece of a tube is a traditional weak point since it conventionally relies solely on the thickness of the polymer material (usually polyethylene (PE)) used for its manufacture to act as a barrier. By overmoulding the barrier insert there is provided a layer of protective polymer material over the cut ends of the aluminium. Even though the barrier insert forms a part of the interior surface of the end piece with this over-moulding process (this means that the barrier insert has a portion which is not embedded by the material, this portion forming a part of the interior surface of the end piece), the cut edges or ends of the barrier insert are embedded in the material. Thus, the ends are embedded in the material of the shoulder of the tube head. The insert is within the shoulder of the head and preferably forms a part of the inner surface of the head. That is, the insert is not completely surrounded and encompassed by the injected plastic of the head.

WO2009157931A1 discloses a film barrier liners for the shoulder/nozzles of tube packaging. The disclosure relates to continuous methods for making tube shoulder/nozzles with film laminate liners to preclude the absorption of product components from a packaged substance in contact with the shoulder/nozzle. A method of making a tube shoulder/nozzle with a barrier in the tube shoulder/nozzle comprising forming the tube shoulder/nozzle, placing the tube shoulder/nozzle in a holder with the shoulder end exposed, placing a film laminate comprising a barrier layer and a polymer layer above the shoulder end, the polymer layer facing into an inner surface of the shoulder/nozzle, contacting the film laminate with a die/mandrel to (i) cut the film laminate to fit into the shoulder/nozzle, and (ii) insert the film laminate into the shoulder/nozzle. A tube structure for packaging products according to WO2009157931A1 comprises a tube body and a tube shoulder/nozzle. The tube shoulder/nozzle is comprised of a polymer, a flexible film laminate on an inner surface of the shoulder/nozzle and the film laminate is comprised of a polymer layer and a barrier layer, the polymer layer is bonded to the shoulder nozzle.

EP0405547A2 discloses an antibacterial laminated film for stretch-packaging which comprises at least one layer of a composition comprising a resin composition comprising mainly an ethylene resin or a 1,2-polybutadiene resin and from 0.05 to 2.0% by weight, based on the resin composition, of an antibacterial silica or silicate powder as a surface layer, the antibacterial silica or silicate powder-containing layer having a thickness of from 1 to 10 µm. According to the disclosure it has also other properties essentially required for application to automatic stretch-packaging, such as moderate sliding properties, self-adhesion, and sufficient transparency.

None of the documents known from the state of the art discloses the tube which, in the head section is equipped with a barrier layer adapted to the internal shape of the head, especially placed on the internal surface of the mouth and tightly closing the mouth's opening in the upper section, wherein the barrier layer would be formed by an aluminium foil.

As a result, none of containers currently available in the market provides the adequate protection of a substance contained in it against the external factors, such as air access, loss of moisture with simultaneous care of the environment inside the tube, which would be secured against the growth of harmful bacteria. There is still a need for packages that provide the protection which provides the tightness for gases and liquids against the cosmetic or parapharmaceutical preparations inside the tube. There is still a huge problem to provide appropriate packages for chemical products, such as hair dyes, which, in addition to their sensitivity to oxygen which penetrates the walls of the tube, show aggressive properties against the package. Until now, this type of products have been packed and stored in tubes made of aluminium. Unfortunately, available and commonly used solutions in the form of aluminium tubes are expensive packages, and there is no possibility to accurately remove the chemical substances from them. Moreover, there are no packages with properties inhibiting the process of bacteria' propagation inside the preparation placed inside the tube, as well as preventing the escape of components contained in the product. It is also necessary to pay attention to extended shelf life of the product, thanks to the use of dispersed silver ions in the internal layer.

As a result of research and development works it turned out that it is possible to obtain the flexible tube, which would provide the barrier properties on its entire surface for the substances placed in it. The head covered with barrier material in the form of aluminium foil on the entire internal surface of the head has been obtained, i.e. on the flange, as well as on the mouth. The laminate's layer containing an aluminium foil and dispersed silver ions also closes the mouth's outlet, which, after opening the package, i.e. unscrewing the cup with a punch, shall be punctured in order to obtain the permeability and ability to empty the contents of the tube.

The purpose of the invention is a flexible tube, which can be of any size and can be equipped with a head of any shape, with providing the barrier and antibacterial properties on the entire surface of the tube and the head along with head's mouth. Both tube's body, as well as its head have a multilayered structure, consisting of at least two layers, including one layer with barrier properties. The tube's head is equipped with internal insert made of ABL laminate with dispersed silver ions on the internal surface of the insert, which imitate the internal shape of the head (flange and mouth) closing at the same time the outlet of the mouth. In the embodiment, the barrier is made of an aluminium foil.

The laminate with a barrier made of aluminium foil is a 5-layer laminate consisting of the following layers indicated in order from the top: the layer made of polyethylene (PE), copolymer layer, aluminium layer, copolymer layer, the layer made of polyethylene (PE) along with dispersed silver ions in the amount from 25 to 500 ppm.

The subject of the invention is a head of a flexible tube intended for connecting with tube's body, consisting of a flange connected with the end of threaded mouth, containing external thermoplastic layer made of materials such as HDPE, LDPE, their mixture or the mixture of polyethylene with any of its copolymers, and the internal insert made of material containing the barrier layer, wherein the internal insert covers the internal surface of a flange, as well as the internal surface of a mouth, tightly closing the mouth's outlet, characterized in that the insert is a laminate containing an aluminium foil and dispersed silver ions in the amount from 25 to 500 ppm.

Preferably, the flexible tube is containing a body which is welded in its lower part, and in its upper part is equipped with the head of flexible tube consisting of the flange (2) connected to one end of threaded mouth (3) containing an external thermoplastic layer (4) made of materials such as HDPE,LDPE, their mixture or the mixture of polyethylene with any copolymer and the internal insert (5) made of material containing the barrier layer, wherein the internal insert covers the internal surface of a flange (2), as well as the internal surface of a mouth (3), tightly closing the mouth's outlet (3), wherein the insert (5) is a laminate containing an aluminium foil and dispersed silver ions in the amount from 25 to 500 ppm.

Another subject of the invention is a production method of flexible tube including the steps of placing the tube's body on a pin, the free end of which has a shape of internal part of tube's head, containing the flange and the mouth, wherein the length of the body must be slightly bigger than the length of a pin, then the pin and the body are pressed into a matrix which has a shape representing the external shape of tube's head and into which the piece of material has been previously introduced along with internal insert in a form of a disc, and the head forming step is performed with simultaneous welding of a flange with a body, after this the tube is subjected to the process of cooling down.

Preferably, the piece of a product takes a form of a ring and is being obtained in extrusion process carried out in the temperature from 170 to 280°C and in the pressure from 3 to 4 bar.

In a typical embodiment, the body of the tube has a freely chosen length, and with use of a flange the body is connected with barrier head with antibacterial protection equipped with a cup with a punch. After filling with the product, the tube is welded in the lower part opposite to the head. The external surface of the tube can be coated with an additional layer of polymeric material, what enables full use of tube for printing purposes.

The important aspect of this invention is the process of forming of flexible tube's head.

The multilayer head with aluminium barrier is formed in the pressure forming process based on the appropriate flow of the polymer between the stamp and the matrix with previously inserted ABL laminate insert. Distribution of the polymer is a result of appropriately chosen piece of a material, geometry of a stamp and matrix and the downforce. The extrusion process carried out in the temperature from 170 to 280°C and in the pressure from 3 to 4 bar.

The process of head forming shall include at least the following steps:
- extrusion of a piece of material;
- precise placement of a piece of material in the form's seating;
- precise placement of a disc made of ABL laminate in the seating;
- compression of a piece, forming of the element;
- cooling the element down;
- cutting the element from the mould off;

Distribution of a polymer inside the pressure moulding element is not accidental and is controlled by the number of parameters, such as:
- geometry of a piece;
- temperature of material;
- volume of polymer's dose from which the piece of material is formed;
- blowing time;
- positioning of a piece;

During the compression the piece flows in three directions. The velocity profile in the thickness of a layer is characterized by the maximum velocity in the centre of a stream and minimum velocity at the wall. This profile indicates that propagation of particles depends on their position inside the three-dimensional stream. During the extrusion, the polymer flows mainly from the centre towards the flange's rims.

The thermoplastic materials which are appropriate to form the thermoplastic layers of the tube are the polymer materials. A particularly preferred thermoplastic material is polyolefin material.

Moreover, the thermoplastic layer can also be a mixture of HDPE polyethylene with LDPE, preferably 80% of HDPE and 20% of LDPE, as well as a mixture of polyethylene with any of its copolymers. The present invention is not limited to said materials, but it covers all materials with flexible properties which may form thermoplastic layers of the tube.

The aluminium is an appropriate material to create the barrier layer used in forming of the body and the head of the tube. The ABL laminate is preferable material used to create the head's internal insert.

The flexible tubes with barrier and antibacterial layer are elastic and have the ability to return to the original shape, and by use of a barrier they are resistant to the penetration of undesirable substances and gases into the product. The barrier layer protects the product against the influence of external factors such as UV radiation, air, moisture, as well as against oxidation of the product or escaping of the substance outside the tube, e.g. fragrance substances. This barrier also protects against aggressive properties of chemical substances located inside the tube. The flexible tube made of polymer with aluminium layer has a flexible properties, it is not subjected to fixed deformations and it "returns" to the original shape, what enables to remove the entire content of the tube. As a result, the disposal of tubes, e.g. hair dyes containing hydrogen peroxide or other chemical substances with toxic or corrosive properties to the municipal waste dumps is avoided.

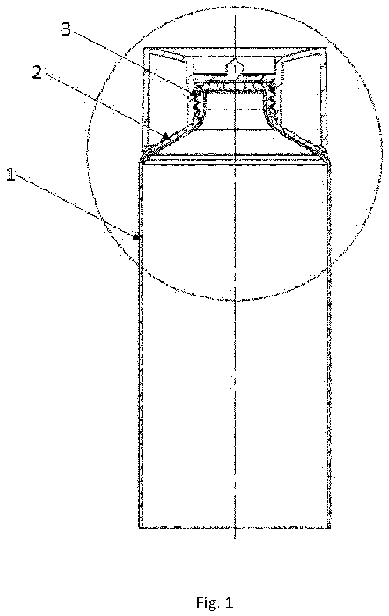

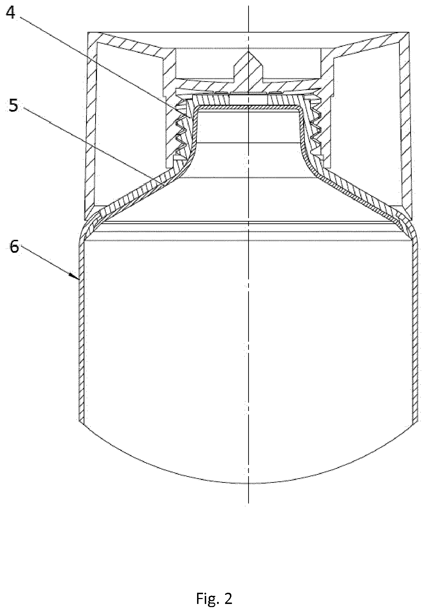

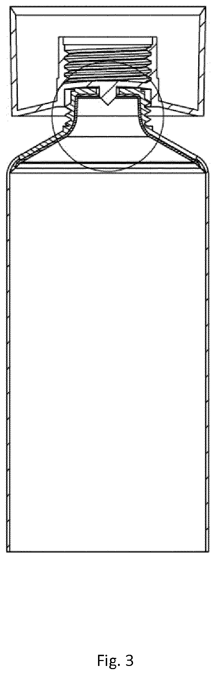

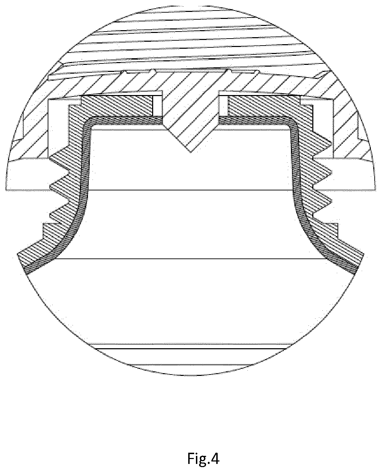

The solution according to the invention is presented in the embodiment on the drawing, on which the Figure 1 shows the flexible tube in the cross-section with a cup with a punch before piercing the internal layer, Figure 2 shows the cross-section of a detail marked on the Figure 1 which presents enlarged head of flexible tube, Figure 3 presents the flexible tube in cross-section with a cup with a punch while piercing the internal layer which closes the mouth of the head and Figure 4 presents the cross-section of a detail marked on Figure 3.

### Example 1

The head of the flexible tube having a flange 2 and a threaded mouth 3 is made of external thermoplastic layer 4, e.g. made of HDPE and internal insert 5 made of a laminate containing an aluminium foil and dispersed silver ions in the amount from 25 to 500 ppm. The layers forming the body 1 of the tube may be the same or different as those which are used in the structure of tube's head. The body 1 can be made of barrier layer 6 which is an ABL laminate. The outlet of the mouth is tightly closed by the internal insert 5. Then, the head is connected with the body 1 of the tube. The external surface of the mouth has a threaded structure, thanks to this the head can be equipped with a cup with a punch. The flexible tube contains the multilayered body 1. The external surface of the body is coated with a polymer layer, while the internal surface is made of a polymer layer containing the dispersed silver ions. One end of the tube is equipped with a head consisting of a flange 2 and a threaded mouth 3.

### Example 2

The flexible tube has a body, which is welded in its lower part and in the upper part it is equipped with a head of flexible tube, consisting of a flange 2 connected with one end of a threaded mouth 3, containing the external thermoplastic layer 4 made of materials such as HDPE, LDPE, their mixtures or a mixture of polyethylene with any of its copolymers, and the internal insert 5 made of a material containing the barrier layer. The internal insert covers both the internal surface of the flange 2 and the internal surface of the mouth 3 closing tightly the outlet of the mouth 3. The internal insert 5 is made of a laminate containing an aluminium foil and dispersed silver ions in the amount from 25 to 500 ppm.

The body 1 of a flexible tube is made of a band printed on a flat of barrier layer 6. The structure of a barrier layer 6 can consist of five layers (polyethylene - copolymer - barrier (e.g. aluminium), copolymer - polyethylene containing the dispersed silver ions).

The band of printed barrier layer 6 formed in a roll with desired diameter welded in longitudinal overlap which forms the edge areas of laminate's layers overlapping each other and cut to the desired length. The multilayer head with aluminium barrier and with dispersed silver ions is welded to the tube, the external surface of a mouth can be threaded. The last step is to press or screw the chosen cup with a punch.

### Example 3

The forming process of the flexible tube with a head equipped with internal barrier insert according to the embodiment can be carried out in such way, that the band of a laminate with aluminium barrier is being formed in the shape of a tube by welding the edges of layers. The tube formed in such way can be coated with a polymer layer, e.g. PE and then it is cut into section of any length. The purpose of coating the tube's body with a layer on its external side is to give it a smooth, ready for printing surface and to form its final shape.

The previously prepared body 1 of the tube is pushed onto the pin, the free end of which has a shape of internal side of tube's head and the length of the body must be slightly longer than the length of a pin.

In the next step, the pin and the body are pushed into the matrix, into which the piece of a material is inserted and previously prepared internal insert 5 in a form of a disc made of a laminate containing an aluminium foil and dispersed silver ions in the amount from 25 to 500 ppm. The matrix has a shape that imitate the external shape of tube's head and blind head's outlet opening. This process allows to form the head with any shape and thickness. The obtained head of a tube has a typical mouth 3 with a diameter smaller than diameter of the body 1 and formed flanged part, which connects this narrowing with tube's body. As a result of this process, a tube with a head is formed, which on its internal surface has an internal insert 5 that imitate the shape of a flange 2 and a mouth 3, closing at the same time outlet of mouth 3. The blind opening of the head will be pierced by the cup with a punch.

The advantages of this invention are following:
- obtaining the unique barrier tube resistant to aggressive chemical substances, which protects the product inside the entire volume of a tube;
- head of the tube with internal aluminium insert that imitate the shape of a flange and mouth closing the mouth's outlet at the same time;
- tube's head which, in addition to barrier properties, also has bacteriostatic properties.

## Claims

1. The head of a flexible tube intended for connecting with tube's body, consisting of a flange (2) connected with the end of threaded mouth (3), containing external thermoplastic layer (4) made of materials such as HDPE, LDPE, their mixture or the mixture of polyethylene with any copolymer and the internal insert (5) made of material containing the barrier layer, wherein the internal insert covers the internal surface of a flange (2), as well as the internal surface of a mouth (3), tightly closing the mouth's outlet (3), **characterized in that**, the insert (5) is a laminate containing an aluminium foil and dispersed silver ions in the amount from 25 to 500 ppm.

2. The head of flexible tube according to claim 1 **characterised in that** the flexible tube containing a body which is welded in its lower part, and in its upper part is equipped with the head of flexible tube consisting of the flange (2) connected to one end of threaded mouth (3) containing an external thermoplastic layer (4) made of materials such as HDPE,LDPE, their mixture or the mixture of polyethylene with any copolymer and the internal insert (5) made of material containing the barrier layer, wherein the internal insert covers the internal surface of a flange (2), as well as the internal surface of a mouth (3), tightly closing the mouth's outlet (3), and wherein the insert (5) is a laminate containing an aluminium foil and dispersed silver ions in the amount from 25 to 500 ppm.

3. Method of manufacturing a flexible tube according to any of preceding claims, including the steps of placing the tube's body (1) on a pin, the free end of which has a shape of internal part of tube's head, containing the flange (2) and the mouth (3), wherein the length of the body (1) must be slightly bigger than the length of a pin, then the pin and the body (1) are pressed into a matrix which has a shape representing the external shape of tube's head and into which the piece of material has been previously introduced along with internal insert (5) in a form of a disc, and the head forming step is performed with simultaneous welding of a flange (2) with a body (1), after this the tube is subjected to the process of cooling down.

4. The method according to claim 3 **characterized in that**, a piece of a material takes the form of a ring and is obtained in the moulding process carried out in the temperature from 170 to 280°C and in the pressure from 3 to 4 bar.

## Patentansprüche

1. Kopf eines flexiblen Schlauchs, der zum Verbinden mit dem Schlauchkörper bestimmt ist, bestehend aus einem Flansch (2), der mit dem Ende einer mit Gewinde versehenen Mündung (3) verbunden ist und eine äußere thermoplastische Schicht (4) aus Materialien wie HDPE, LDPE, deren Gemisch oder dem Gemisch von Polyethylen mit einem beliebigen Copolymer enthält, und einer inneren Einlage (5) aus einem Material, das die Sperrschicht enthält, wobei die innere Einlage die Innenfläche des Flansches (2) sowie die Innenfläche der Mündung (3) bedeckt und den Auslass der Mündung (3) dicht verschließt, **dadurch gekennzeichnet, dass** die Einlage (5) ein Laminat ist, das ein den Auslass (3) der Mündung dicht verschließt, **dadurch gekennzeichnet, dass** der Einsatz (5) ein Laminat ist, das eine Aluminiumfolie und dispergierte Silberionen in der Menge von 25 bis 500 ppm enthält.

2. Kopf eines flexiblen Schlauchs nach Anspruch 1, **dadurch gekennzeichnet, dass** der flexible Schlauch einen Körper enthält, der in seinem unteren Teil verschweißt ist, und in seinem oberen Teil mit dem Kopf des flexiblen Schlauchs ausgestattet ist, der aus dem Flansch (2) besteht, der mit einem Ende der Gewindemündung (3) verbunden ist, die eine äußere thermoplastische Schicht (4) enthält, die aus Materialien wie HDPE, LDPE, ihrer Mischung oder der Mischung von Polyethylen mit einem beliebigen Copolymer hergestellt ist und der inneren Einlage (5) aus einem die Sperrschicht enthaltenden Material, wobei die innere Einlage die Innenfläche eines Flansches (2) sowie die Innenfläche einer Mündung (3) bedeckt und den Auslass der Mündung (3) dicht verschließt, und wobei die Einlage (5) ein Laminat ist, das eine Aluminiumfolie und dispergierte Silberionen in der Menge von 25 bis 500 ppm.

3. Verfahren zur Herstellung eines flexiblen Schlauchs nach einem der vorhergehenden Ansprüche, umfassend die Schritte des Aufsetzens des Körpers (1) des Schlauchs auf einen Stift, dessen freies Ende die Form des inneren Teils des Kopfes des Schlauchs hat, der den Flansch (2) und die Öffnung (3) enthält, wobei die Länge des Körpers (1) etwas größer als die Länge eines Stifts sein muss, dann werden der Stift und der Körper (1) in eine Matrize gepresst, die eine Form hat, die die äußere Form des Rohrkopfes darstellt und in die das Materialstück vorher zusammen mit einem inneren Einsatz (5) in Form einer Scheibe eingeführt wurde, und der Schritt der Kopfbildung wird mit gleichzeitigem Schweißen eines Flansches (2) mit einem Körper (1) durchgeführt, danach wird das Rohr dem Prozess der Abkühlung unterzogen.

4. Verfahren nach Anspruch 3, **dadurch gekennzeichnet, dass** das Materialstück die Form eines Rings hat und in dem Formgebungsverfahren erhalten wird, das bei einer Temperatur von 170 bis 280°C und einem Druck von 3 bis 4 bar durchgeführt wird.

## Revendications

1. La tête d'un tube flexible destinée à être raccordée au corps du tube, constituée d'une bride (2) reliée à l'extrémité de l'embouchure filetée (3), contenant une couche thermoplastique externe (4) faite de matériaux tels que le HDPE, le LDPE, leur mélange ou le mélange de polyéthylène avec n'importe quel copolymère et l'insert interne (5) fait de matériau contenant la couche de barrière, dans lequel l'insert interne couvre la surface interne d'une bride (2), ainsi que la surface interne d'une embouchure (3), fermant hermétiquement la sortie de l'embouchure (3), **caractérisée en ce que**, l'insert (5) est un stratifié contenant une feuille d'aluminium et des ions d'argent dispersés en une quantité de 25 à 500 ppm.

2. La tête du tube flexible selon la revendication 1, **caractérisée en ce que** le tube flexible contenant un corps qui est soudé dans sa partie inférieure, et dans sa partie supérieure est équipé de la tête de tube flexible constituée de la bride (2) reliée à une extrémité de l'embouchure filetée (3) contenant une couche thermoplastique externe (4) faite de matériaux tels que le HDPE, le LDPE, leur mélange ou le mélange de polyéthylène avec n'importe quel copolymère et l'insert interne (5) fait d'un matériau contenant la couche barrière, dans lequel l'insert interne couvre la surface interne d'une bride (2), ainsi que la surface interne d'une embouchure (3), fermant hermétiquement la sortie de l'embouchure (3), et dans lequel l'insert (5) est un stratifié contenant une feuille d'aluminium et des ions argent dispersés en quantité de 25 à 500 ppm.

3. Le procédé de fabrication d'un tube flexible selon l'une quelconque des revendications précédentes, comprenant
les étapes consistant à placer le corps du tube (1) sur une broche, dont l'extrémité libre a la forme de la partie interne de la tête du tube, contenant la bride (2) et l'embouchure (3), dans lesquelles la longueur du corps (1) doit être légèrement supérieure à la longueur d'une broche, ensuite, la broche et le corps (1) sont pressés dans une matrice qui a une forme représentant la forme externe de la tête du tube et dans laquelle la pièce de matériau a été préalablement introduite avec un insert interne (5) en forme de disque, et l'étape de formation de la tête est réalisée avec le soudage simultané d'une bride (2) avec un corps (1), après quoi le tube est soumis au processus de refroidissement.

4. Le procédé selon la revendication 3, **caractérisé en ce qu'**une pièce d'un matériau prend la forme d'un anneau et est obtenue dans le processus de moulage effectué à une température de 170 à 280°C et à une pression de 3 à 4 bars.
